# EUROPÄISCHE PATENTANMELDUNG

(11) **EP 4 344 756 A1**
(43) Veröffentlichungstag der Anmeldung: **03.04.2024**
(21) Anmeldenummer: 23200607.2
(22) Anmeldetag: 28.09.2023
(51) Int. Cl.: A63C 11/04, B23K 20/12, B23Q 15/06, B29C 73/24

(54) **LAUFFLÄCHENREPARATURGERÄT UND VERFAHREN ZUR LAUFFLÄCHENREPARATUR FÜR SKI UND SNOWBOARD**

(30) Priorität: 28.09.2022 DE 102022125060
(71) Anmelder: Reichmann & Sohn GmbH, 89264 Weißenhorn (DE)
(72) Erfinder: ERSING, Siegfried, 89264 Weißenhorn (DE); KOSMOWSKI, Frank, 87748 Fellheim (DE)
(74) Vertreter: Baur & Weber Patentanwälte PartG mbB

(57) **Zusammenfassung**

Laufflächenreparaturgerät für Ski (1) und/oder Snowboard umfassend:
- eine Bilderkennungsvorrichtung (19) mit einer Kamera (17), wobei die Kamera (17) ausgebildet ist ein Bild einer Lauffläche (3) oder eines Laufflächenbereichs eines Skis (1) oder eines Snowboards zu erfassen, und wobei die Bilderkennungsvorrichtung (19) ausgebildet ist, einen defekten Bereich (5) in der Lauffläche (3) oder dem Laufflächenbereich zu detektieren,
- einen beweglichen Reparaturbelagsapplikator (13, 15), der ausgebildet ist, ein Reparaturbelagsmaterial selektiv auf den defekten Bereich (5) aufzutragen,
- eine Steuervorrichtung (27), die ausgebildet ist, Bewegung und Betrieb des Reparaturbelagsapplikators (13, 15) zu steuern, sodass der Reparaturbelagsapplikator (13, 15) das Reparaturbelagsmaterial selektiv auf den defekten Bereich (5) der Lauffläche (3) aufträgt.

## Beschreibung

Die Erfindung betrifft ein Laufflächenreparaturgerät für einen Ski und/oder ein Snowboard sowie ein Verfahren zur Laufflächenreparatur für Ski und/oder Snowboard.

Ski und Snowboards sind Wintersportgeräte, die eine gleitende Fortbewegung auf Schnee ermöglichen. Sie haben eine Lauffläche, mit der sie über den Schnee gleiten. Die Lauffläche weist eine Beschichtung als Gleitfläche auf, die auch als Ski- beziehungsweise Snowboardbelag bezeichnet wird. Dieser Belag kann als Kunststoff-Gleitfläche ausgebildet sein. Er soll elastisch sein, zugleich aber auch mechanisch verschleißfest sein und gute Gleiteigenschaften haben.

Es kann zu Beschädigungen der Lauffläche durch äußere Einwirkungen oder während des Fertigungsprozess kommen. So kann die Fahrt über aus der Schneeoberfläche herausragende Steine zu Kratzern in der Lauffläche führen. Solche Beschädigungen wirken sich negativ auf das Fahrverhalten des Skis oder des Snowboards aus. Aus diesem Grund wird die Skibelagsstruktur der Lauffläche regelmäßig aufbereitet. Bei einer konventionellen Methode wird eine Belagsmaterialschicht großflächig auf die Lauffläche aufgetragen, sodass sie vollständig bedeckt ist und das Belagsmaterial sowohl defekte Bereiche bedeckt und auffüllt als auch nicht defekte Bereiche der Lauffläche bedeckt. Das überflüssige Belagsmaterial auch auf der unbeschädigten Lauffläche bildet so eine großflächige Schicht, die nach dem Aushärten dann mühsam wieder abgetragen wird, beispielsweise durch Abschleifen. Dieses Vorgehen ist material- und zeitaufwändig.

Es stellt sich die Aufgabe, eine Vorrichtung für eine verbesserte Laufflächenreparatur und ein geeignetes Verfahren für diesen Zweck bereitzustellen.

Die Aufgabe wird durch ein Laufflächenreparaturgerät für Ski und/oder Snowboard gelöst. Es umfasst eine Bilderkennungsvorrichtung mit einer Kamera, die ausgebildet ist, eine Lauffläche oder einen Laufflächenbereich eines Skis oder eines Snowboards als Bild zu erfassen, wobei die Bilderkennungsvorrichtung ausgebildet ist, einen defekten Bereich in der Lauffläche oder dem Laufflächenbereich zu detektieren. Ein beweglicher Reparaturbelagsapplikator ist ausgebildet, ein Reparaturbelagsmaterial selektiv auf den defekten Bereich aufzutragen. Eine Steuervorrichtung ist ausgebildet, Bewegung und Betrieb des Reparaturbelagsapplikators zu steuern, sodass der Reparaturbelagsapplikator das Reparaturbelagsmaterial selektiv auf den defekten Bereich der Lauffläche aufträgt.

Das Laufflächenreparaturgerät ermöglicht eine partielle und vollautomatisierte Aufbereitung von Materialdefekten im Ski- und Snowboardbereich mittels moderner Kamera- und Bildverarbeitungstechnik. Das Laufflächenreparaturgerät ermöglicht eine kamerageführte Reparatur des Belags der Gleitflächen, insbesondere Kunststoffgleitflächen, an der Oberseite der Laufflächen. Zunächst wird durch die Kamera die Lauffläche erfasst. Die Kamera kann eine Beleuchtung umfassen, um den aufgenommenen Bereich auszuleuchten und dadurch die anschließende Bilddatenauswertung zu verbessern. Die Erfassung der Oberfläche kann auch bereichsweise erfolgen, beispielsweise indem bei einem Paar Ski zunächst die Lauffläche des einen Skis erfasst (und repariert) wird und dann die Lauffläche des anderen Skis. Die Bildverarbeitungsvorrichtung detektiert defekte Bereiche in der erfassten Lauffläche oder im erfassten Laufflächenbereich. Ein Defekt kann beispielsweise ein Materialfehler im Belag oder eine Beschädigung, wie eine Schramme, sein. Die Steuervorrichtung steuert den Reparaturbelagsapplikators so an, dass er zum defekten Bereich bewegt wird und das Reparaturbelagsmaterial selektiv auf den defekten Bereich der Lauffläche aufträgt. Selektiv meint, dass der Auftrag sich zielgerichtet auf den defekten Bereich konzentriert. Das Reparaturbelagsmaterial, mit dem die defekten Bereiche aufgefüllt werden, wird im Gegensatz zum konventionellen Vorgehen nicht großflächig auf den gesamten Skibelag aufgetragen, sondern nur auf die defekten Bereiche. Nichtsdestotrotz kann auf dem nichtdefekten Randbereich des defekten Bereich auch Reparaturbelagsmaterial aufgebracht worden sein, sodass sichergestellt ist, dass der defekte Bereich vollständig mit Reparaturbelagsmaterial bedeckt und aufgefüllt ist und keine Spalten im Randbereich auftreten. Das Reparaturbelagsmaterial wird im flüssigen, insbesondere dickflüssigen Zustand aufgetragen und härtet dann aus. Durch Abschleifen überstehenden Materials werden die reparierten Bereiche an die nicht defekte Gleitfläche angepasst, sodass die Oberfläche plan ist und keine Höhenunterschiede zwischen reparierten und nicht reparierten Bereichen mehr aufweist. Durch die partielle Reparatur der Lauffläche wird der Materialverbrauch maßgeblich verringert und der Aufwand für das anschließende Planschleifen deutlich reduziert. Ein weiterer Vorteil ist, dass auch die Beeinträchtigung durch Dämpfe und Gerüche, die beim Auftrag des Reparaturbelagsmaterials entstehen, geringer ist als beim großflächigen Materialauftrag des konventionellen Verfahrens.

Die Bilderkennungsvorrichtung kann als einteiliges Gerät ausgebildet sein, dass sowohl die Kamera als auch die für die Bilderkennungsvorrichtung wesentlichen Komponenten zur Bildverarbeitung im selben Gehäuse umfasst. Alternative können Kamera und die Komponenten zur Bildverarbeitung, beispielsweise einen Mikrokontroller umfassend, räumlich getrennt angeordnet sein.

Die Bilderkennungsvorrichtung zur Detektion des defekten Bereichs in der Lauffläche oder dem Laufflächenbereich ist ein Gerät zur automatisierten optischen Oberflächeninspektion mit Hilfe von einer oder mehreren Kameras. Eine Bildverarbeitung in der Bilderkennungsvorrichtung arbeitet die gemachten Bilder auf. Diese Bilddatenauswertung nach der Bildaufnahme, die vorteilhafterweise unter geeigneter Beleuchtung gemacht worden sind, wird durch ein für die Kunststofflaufflächen geeignetes Verfahren durchgeführt, das sich in einen einfachen Fall auf einem Sollbildvergleich, beispielsweise an dem Laufflächendesign orientierend, basiert und/oder vorteilhafterweise algorithmusbasiert ist, indem Software den defekten Bereich anhand einer Fehlerbeschreibung detektiert. Dadurch lassen sich defekte Bereiche beispielsweise anhand der Verfärbung, dem Glanzgrad oder ihrer Tiefencharakteristik feststellen. Die Algorithmen können beispielhaft die Flächenauswertung und/oder Konturauswertung vorsehen, um Unregelmäßigkeiten der Oberfläche zu detektieren und entsprechend ihrer Ausprägung als defekte Bereiche zu klassifizieren. Der Fachmann ist in der Lage eine für die Vorrichtung und das Verfahren geeignete Oberflächeninspektion vorzusehen, um die defekten Bereiche zu detektieren, sodass auf eine detailliertere Erläuterung dieser Aspekte verzichtet wird.

In einer Ausführung ist der Reparaturbelagsapplikator in einer Längsrichtung und in einer Querrichtung, die winklig, insbesondere rechtwinklig zur Längsrichtung verläuft, beweglich. Durch die Kombination von Längs- und Querbewegung kann er zielgerichtet zum defekten Bereich und während der Reparatur über den defekten Bereich bewegt werden. Die Längsrichtung korrespondiert vorteilhafterweise mit der Längsrichtung des zu reparierenden Skis oder Snowboard im Laufflächenreparaturgerät. Vorteilhafterweise ist auch die Kamera zumindest in Längsrichtung beweglich, sodass sie bei der Erfassung der Lauffläche oder des Laufflächenbereichs in Längsrichtung über die Lauffläche bewegt wird. Dies geschieht vorteilhafterweise gemeinsam mit dem Reparaturbelagsapplikator, der auf dem Weg zurück, wenn die Kamera und der Reparaturbelagsapplikator entgegen der Längsrichtung bewegt werden, den defekten Bereich mit Reparaturbelagsmaterial auffüllt.

In einer Ausführung des Laufflächenreparaturgeräts ist ein Aufnahmebereich für den Ski oder das Snowboard vorgesehen. Vorteilhafterweise umfasst der Aufnahmebereich eine Halterung für den Ski oder das Snowboard, der beziehungsweise das in einer vorgegebenen Position gehalten wird. Der Ski oder das Snowboard ist in der Halterung in Längsrichtung ausrichtbar, damit die Kamera und der Reparaturbelagsapplikator entlang der Gleitfläche hin- und herbewegt werden können. Vorteilhafterweise hält die Halterung ein Paar Ski gleichzeitig, sodass die Ski nebeneinander angeordnet sind.

Ski und Snowboard sind in einer Ausführung vertikal oder im Wesentlichen vertikal bezogen auf einen Boden, auf dem das Laufflächenreparaturgerät aufstellbar ist, im Laufflächenreparaturgerät ausgerichtet. In einer anderen Ausführung sind Ski und Snowboard horizontal oder im Wesentlichen horizontal ausgerichtet. Auch eine winklige Ausrichtung bezogen auf den Boden, auf dem das Laufflächenreparaturgerät aufstellbar ist, ist denkbar. Mit der Ausrichtung von Ski und Snowboard geht auch die Ausrichtung des Systems, insbesondere des Rahmens für die beweglichen Komponenten und der Richtung, in der sich Kamera und Reparaturbelagsapplikator bewegen, einher, wobei die Ausrichtung nicht unbedingt parallel zu Ski und Snowboard erfolgen muss. Die Ausrichtung kann vertikal oder im Wesentlichen vertikal bezogen auf den Boden, auf dem das Laufflächenreparaturgerät aufstellbar ist, ausgerichtet sein. Alternativ kann die Ausrichtung horizontal oder im Wesentlichen horizontal sein. Aber auch eine winklige Ausrichtung ist denkbar.

In einer Ausführung weist der Reparaturbelagsapplikator eine Austrittsdüse auf und ist so beweglich, dass die Austrittsdüse in Richtung der Aufnahmevorrichtung beweglich ist. Dies kann durch eines Bewegung des gesamten Reparaturbelagsapplikators oder nur seines Düsenbereichs erreicht werden. Dadurch wird ermöglicht, dass eine Austrittsdüse zum Auftragen des Reparaturbelagsmaterials auf dem defekten Bereich positioniert werden kann. Nach dem Auftragen wird die Düse vom defekten Bereich, das heißt auch von der Aufnahmevorrichtung wegbewegt und der Reparaturbelagsapplikator zum nächsten defekten Bereich bewegt.

Eine Ausführung des Laufflächenreparaturgeräts weist zwei oder mehr Reparaturbelagsapplikatoren auf. Ein erster Reparaturbelagsapplikator ist mit einem ersten Material befüllbar, und ein zweiter Reparaturbelagsapplikator ist mit einem zweiten Material befüllbar. Die Steuervorrichtung ist ausgebildet, einen vom ersten und zweiten Reparaturbelagsapplikator auszuwählen und so zu steuern, dass er das erste beziehungsweise das zweite Material als Reparaturbelagsmaterial selektiv auf den defekten Bereich aufträgt. Dadurch können die beschädigten Bereiche durch verschiedene Reparaturbelagsmaterialien repariert werden, die sich beispielsweise hinsichtlich ihrer optischen Eigenschaften, insbesondere ihrer Farbe oder Transparenz, unterscheiden.

In einer Ausführung ist die Bilderkennungsvorrichtung ausgebildet, eine Farbe des defekten Bereichs und/oder seiner Umgebung am Rand des defekten Bereichs zur detektieren. Die Steuervorrichtung ist ausgebildet, in Abhängigkeit der Farbe einen vom ersten und zweiten Reparaturbelagsapplikator auszuwählen. So können beispielsweise defekte Bereiche in einem schwarzen Laufflächenbereich mit einem schwarzen Reparaturbelagsmaterial aufgefüllt werden, und defekte Bereiche in einem andersfarbigen Laufflächenbereich können mit einem transparenten Reparaturbelagsmaterial aufgefüllt werden.

Das Laufflächenreparaturgerät umfasst in einer Ausführung ein Positioniersystem, an dem die Kamera und der Reparaturbelagsapplikator angeordnet sind, um sich über dem Aufnahmebereich zu bewegen. Weitere Reparaturbelagsapplikatoren können ebenfalls am Positioniersystem angeordnet werden.

Das Positioniersystem bewegt die Kamera und den oder die Reparaturbelagsapplikatoren. Durch Linearführung und -antrieb sind die Kamera und der Reparaturbelagsapplikator gleichzeitig in die Längsrichtung bewegbar. Die Kamera und der oder die Reparaturbelagsapplikatoren sind auf einer Querschiene angeordnet, die durch in Längsrichtung entlang zweier Längsschienen beweglich ist. Zumindest der oder die Reparaturbelagsapplikatoren sind entlang der Querschiene beweglich, um sie zu den defekten Bereichen zu bewegen. Vorteilhafterweise ist auch die Kamera entlang der Querschiene beweglich. Die Steuervorrichtung steuert das Positioniersystem und damit die Bewegungen von Kamera und Reparaturbelagsapplikatoren.

Das Verfahren zur Laufflächenreparatur für Ski und/oder Snowboard sieht folgende Schritte vor: bildliche Erfassung einer Lauffläche oder eines Laufflächenbereichs eines Skis oder eines Snowboards durch eine Kamera, Detektion eines defekten Bereich in der Lauffläche durch eine Bilderkennungsvorrichtung, und selektives Auftragen eines Reparaturbelagsmaterials auf den defekten Bereich mittels eines Reparaturbelagsapplikators.

Die bildliche Erfassung der Lauffläche umfasst eine Bewegung der Kamera entlang der Lauffläche in einer Längsrichtung, sodass die Kamera die Lauffläche oder einen Laufflächenbereich erfasst, während sie darüber hinwegbewegt wird.

Die Kamera und der Reparaturbelagsapplikator werden zunächst gleichzeitig in Längsrichtung und dann entgegen der Längsrichtung bewegt, da sie auf derselben Querschiene angeordnet sind, welche in Längsrichtung bewegt wird. Bei der Bewegung entgegen der Längsrichtung wird das Reparaturbelagsmaterial selektiv auf die Lauffläche aufgetragen. Der Reparaturbelagsapplikator ist zu diesem Zweck entlang der Querschiene beweglich.

Wenn die Gleitfläche in ihrer ganzen Breite nicht durch eine Kamera-Längsbewegung erfasst werden kann, wird die Bewegung von der Kamera und dem Reparaturbelagsapplikator gleichzeitig in Längsrichtung und dann entgegen der Längsrichtung als Hin- und Herbewegung mehrfach durchgeführt, um die Gleitfläche in ihrer gesamten Breite zu erfassen. Zwischen den Kameralängsbewegungen kann die Kamera versetzt oder geschwenkt werden, um den Aufnahmebereich zu verändern. Auf diese Weise können auch mehrere Gleitflächen repariert werden, die gleichzeitig im Aufnahmebereich positioniert sind. Dies trifft beispielsweise für ein Paar Ski zu.

Das Verfahren kann das Detektieren einer Farbe des defekten Bereichs und/oder seiner Umgebung und das Auswählen eines Reparaturbelagsmaterials aus einem ersten und einem zweiten Material in Abhängigkeit der Farbe des defekten Bereichs umfassen, um verschiedenfarbige Gleitflächen in ästhetisch ansprechender Weise zu reparieren.

Nachfolgend werden einige Ausführungsbeispiele anhand der Zeichnung näher erläutert. Es zeigen:
- Figur 1: eine dreidimensionale Ansicht eines Ausführungsbeispiels eines Laufflächenreparaturgeräts,
- Figur 2: das Ausführungsbeispiel eines Laufflächenreparaturgeräts in einer Seitenansicht,
- Figur 3: eine dreidimensionale Ausschnittsansicht des Ausführungsbeispiels eines Laufflächenreparaturgeräts in einer Seitenansicht,
- Figur 4: ein dreidimensionale Ausschnittsansicht von oben auf das des Ausführungsbeispiel eines Laufflächenreparaturgeräts,
- Figur 5: eine dreidimensionale Ansicht eines Ausführungsbeispiels eines Reparaturbelagsapplikators und
- Figur 6: ein Blockdiagramm mit Schritten eines Verfahrens zur Laufflächenreparatur.

In den Figuren sind gleiche oder funktional gleichwirkende Komponenten mit den gleichen Bezugszeichen versehen.

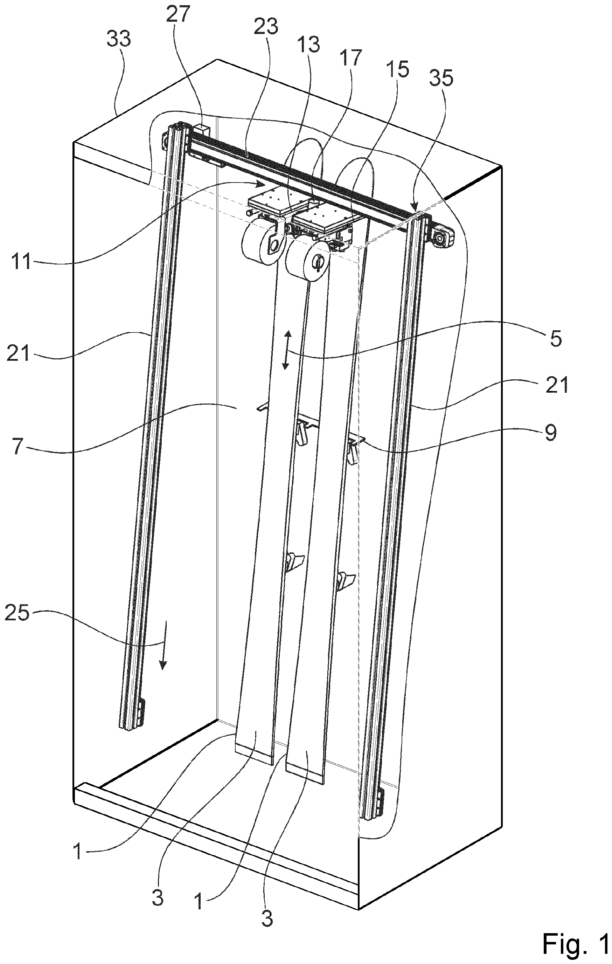

Figur 1 zeigt eine dreidimensionale Ansicht eines Ausführungsbeispiels eines Laufflächenreparaturgeräts für Ski 1 und/oder Snowboard, mit dem defekte Bereiche 5 in der Lauffläche 3 eines Skis 1 oder eines Snowboards repariert werden können.

Das Laufflächenreparaturgerät umfasst einen Aufnahmebereich 7 für Ski 1 und Snowboard mit einer Halterung 9, die ein Paar Ski 1 oder ein Snowboard in einer vorgegebenen Position halten. In diesem Ausführungsbeispiel ist die Halterung 9 an einer Rückwand befestigt. Die Ski 1 sind aufrecht gegen die Halterung 9 gelehnt und liegen in Aussparungen der Halterung 9, sodass die Skispitzen nach oben weisen. Anstatt eines Paar Ski 1 kann ein Snowboard aufrecht in die Halterung 9 gelehnt werden.

Das Laufflächenreparaturgerät umfasst ein Positioniersystem 11, an der ein erster Reparaturbelagsapplikator 13 und ein zweiter Reparaturbelagsapplikator 15 sowie eine Kamera 17 einer Bilderkennungsvorrichtung 19 angeordnet sind.

Das Positioniersystem 11 umfasst einen Rahmen 35 mit zwei aufragenden Längsschienen 21, zwischen denen eine horizontale Querschiene 23 verläuft, die entlang der seitlichen Längsschienen 21 beweglich ist. Die Längsschienen 21 sind seitlich des Aufnahmebereichs 7 angeordnet, sodass die Querschiene 23 über dem Aufnahmebereich 7 in Längsrichtung 25 und entgegen der Längsrichtung 25 hin- und herbewegbar ist. Ein Linearantrieb bewirkt diese Bewegung der Querschiene 23.

Der erste und der zweite Reparaturbelagsapplikator 13, 15 und die Kamera 17 sind an die Querschiene 23 gekoppelt, sodass sie entlang der Querschiene 23 beweglich sind. Linearantriebe bewirken diese Bewegungen in Querrichtung vom ersten und zweiten Reparaturbelagsapplikator 13, 15 und von der Kamera 17.

Die Antriebe des Positioniersystems 11 werden durch eine Steuervorrichtung 27 gesteuert, sodass der erste und zweite Reparaturbelagsapplikator 13, 15 und die Kamera 17 an eine gewünschte Position in einer Ebene über dem Aufnahmebereich 7 bewegt werden können. Die Bewegungen des ersten und zweiten Reparaturbelagsapplikators 13, 17 und der Kamera 17 in Längsrichtung 25, die mit den Längsschienen 21 korrespondiert, erfolgt gleichzeitig. Die Bewegungen in Querrichtung, die mit der Querschiene 23 korrespondiert, erfolgen unabhängig voneinander, sodass der erste und zweite Reparaturbelagsapplikator 13, 17 und die Kamera 17 in Querrichtung zueinander verschiebbar sind.

Die Steuervorrichtung 27 kann am Positioniersystem 11 oder von ihr beabstandet, beispielsweise an einer Wand montiert, angeordnet sein. Vorteilhafterweise weist die Steuervorrichtung 27 noch eine Bedieneinrichtung auf, um den Reparaturvorgang zu starten und zu steuern. Die Bedieneinrichtung kann alternativ und/oder zusätzlich auch als Fernbedienung, beispielsweise als App auf einem Smartphone, vorgesehen sein.

Sowohl der Rahmen 35 als auch die Halterung 9 können in einem vorn offenen Gehäuse 33 angeordnet sein, dessen Seitenwände den Ski und das Laufflächenreparaturgerät schützen und den Reparaturvorgang abschirmen. Auch die die seitliche Ausbreitung von Dämpfen und Gerüchen, die bereits in geringerem Umfang im Vergleich zum konventionellen Vorgehen auftreten, wird durch das Gehäuse 33 vermindert.

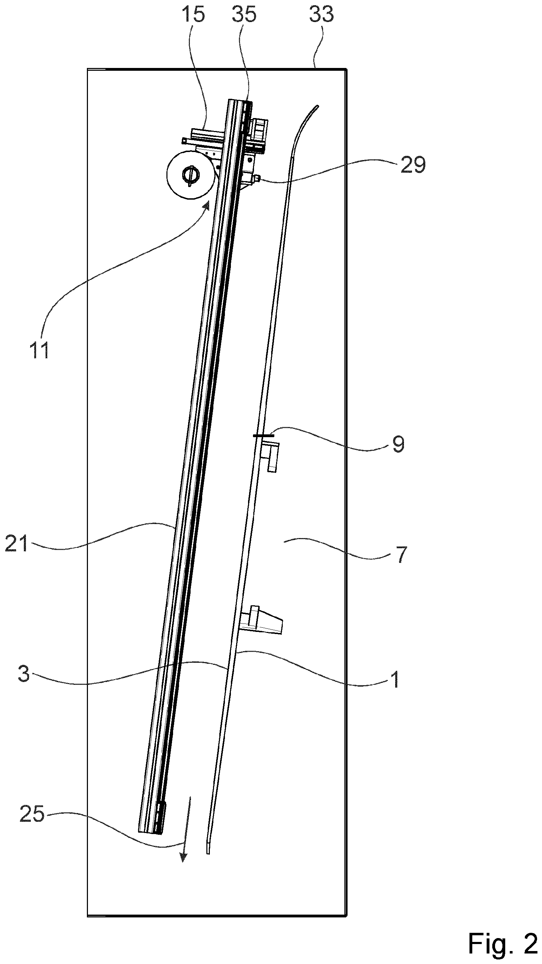

Figur 2 zeigt das Laufflächenreparaturgerät in einer Seitenansicht ohne Seitenwand. Die Längsschienen 21 verlaufen im wesentlich parallel zu den im Aufnahmebereich 7 angeordneten Laufflächen 3 der Ski 1. Auch die Lauffläche 3 eines Snowboards im Aufnahmebereich 7 würde parallel verlaufen. Allerdings funktioniert das Laufflächenreparaturgerät auch bei Winkelversatz zwischen Lauffläche 3 und Längsschienen 21. Sowohl die Längsschienen 21 als auch die Ski 1 sind leicht zur Senkrechten geneigt. Diese Position ist stabiler und geht mit einem einfachen Aufbau der Halterung 9 einher, in die Ski und Snowboard gelehnt werden. Nichtsdestotrotz können der Aufnahmebereich 7 und das Positioniersystem 11 in einem alternativen Ausführungsbeispiel so angeordnet sein, dass die Ski 1 und das Snowboard vertikal oder im Wesentlichen vertikal oder horizontal oder im Wesentlichen horizontal oder winkelig zur Vertikalen oder Horizontalen angeordnet sind.

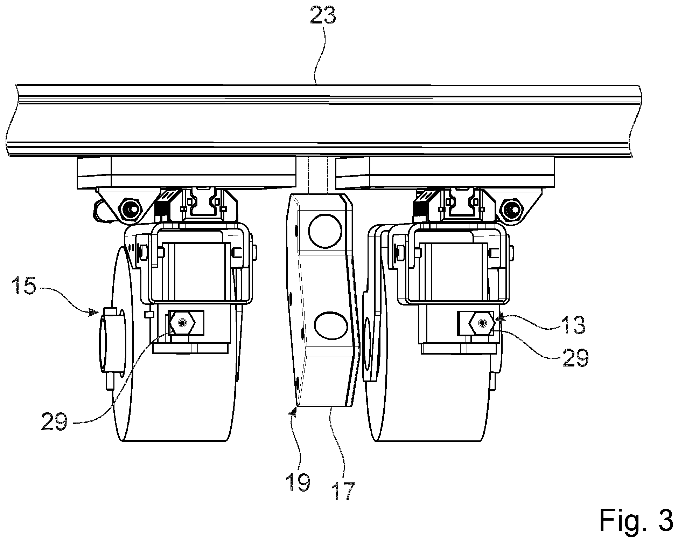

Figur 3 zeigt eine dreidimensionale Ausschnittsansicht mit Blickrichtung aus dem Aufnahmebereich 7 heraus auf den ersten und zweiten Reparaturbelagsapplikator 13, 15 und die Kamera 17, die an der Querschiene 23 angeordnet sind. Die Kamera 17 ist zwischen dem ersten und dem zweiten Reparaturbelagsapplikator 13, 15 angeordnet.

Die Kamera 17 ist ausgebildet, ein Bild der Lauffläche 3 eines Skis 1 oder eines Snowboards zu erfassen. Die Bilderfassung der Lauffläche 3 erfolgt, indem die Kamera 17 in Längsrichtung entlang der Lauffläche 3 bewegt wird. Allerdings ist die Breite des durch die Kamera 17 erfassbaren Bildbereichs begrenzt, sodass dieser Schritt gegebenenfalls mehrfach mit jeweils seitlich versetzter oder verschwenkter Kamera 17 oder verstellter Kameralinse durchgeführt werden muss, um die Lauffläche 3 in ihrer ganzen Breite zu erfassen. Während einer Längsbewegung wird die Lauffläche 3 eines Skis 1 in ihrer ganzen Breite erfasst, sodass für ein Paar Ski 1 zwei Kamerafahrten in Längsrichtung 25 erforderlich sind. Für ein Snowboard, das breiter ist, sind mehrere Kamerafahrten, üblicherweise drei, erforderlich.

Mit den Komponenten zur Bildverarbeitung der Bilderkennungsvorrichtung 19 können defekte Bereiche in der Lauffläche detektiert werden. Die Bilderkennungsvorrichtung 19 mit einer oder mehreren Komponenten zur Bildverarbeitung kann im Kameragehäuse angeordnet sein und integraler Bestandteil einer Kameravorrichtung mit einer Kamera 17 mit einer oder mehreren Linsen sein, wobei die Bildverarbeitung des von der Kamera 17 erfassten Bildes in der Kameravorrichtung durchgeführt wird. In diesem Ausführungsbeispiel sind die für die Bildverarbeitung erforderlichen Komponenten im Kameragehäuse integriert. Alternativ können die Komponenten der Bildverarbeitung der Bilderkennungsvorrichtung 19 in einer separaten Vorrichtung angeordnet sein, der das von der Kamera 17 erfasste Bild zugeführt wird, oder in der Steuerungsvorrichtung 27 vorgesehen sein. Zusätzlich kann die Bilderkennungsvorrichtung 19 erkennen, ob der defekte Bereich 5 in einem schwarzen oder farbigen Bereich der Lauffläche 3 ist. Die farbigen Bereiche in der üblicherweise schwarzen Lauffläche 3 sind beispielsweise Herstellerkennzeichen oder Designelemente. Die Unterscheidung zwischen den Bereichen kann beispielsweise erfolgen, indem die Bilderkennungsvorrichtung 19 die Farbe des defekten Bereichs 5 und/oder seiner unmittelbaren Umgebung detektiert. Um diese zusätzliche Funktion der Bilderkennungsvorrichtung 19 zu unterstützen, kann die Kamera 17 mehrere Linsen aufweisen.

Der erste und der zweite Reparaturbelagsapplikator 13, 15 sind ausgebildet, ein Reparaturbelagsmaterial selektiv auf den defekten Bereich 5 aufzutragen, der zuvor durch die Bilderkennungsvorrichtung 19 detektiert worden ist. Das Auftragen erfolgt nach dem Erfassen der Lauffläche 3 durch die Kamera 17, während die Querschiene 23 entgegen der Längsrichtung 25 wieder zurückbewegt wird. Durch eine Bewegung quer zur Längsrichtung 25 entlang der Querschiene 23 kann bei dieser Fahrt der erste oder zweite Reparaturbelagsapplikator 13, 15 gezielt über dem defekten Bereich 5 positioniert werden und das Reparaturbelagsmaterial aus einem der Reparaturbelagsapplikatoren 13, 15 aufgetragen werden. Während des Auftragens wird der Reparaturbelagsapplikator 13, 15 so bewegt, dass das Reparaturbelagsmaterial auf dem defekten Bereich 5 aufgetragen wird und ihn auffüllt. Abgesehen von einem Auftrag des Reparaturbelagsmaterials, der geringfügig über den Rand des defekten Bereichs 5 ragt, erfolgt gerade kein großflächiger Auftrag des Reparaturbelagsmaterials auch auf dem nichtdefekten Bereich der Lauffläche 3.

Der erste Reparaturbelagsapplikator 13 ist mit einem ersten Material befüllt, und der zweite Reparaturbelagsapplikator 15 ist mit einem zweiten Material befüllt. In einem Ausführungsbeispiel ist das erste Material schwarz, und das zweite Material ist durchsichtig. In Abhängigkeit der Farbe des defekten Bereichs 5 und/oder seiner Umgebung wird der erste oder der zweite Reparaturbelagsapplikator 13, 15 von der Steuervorrichtung 27 ausgewählt, um das erste beziehungsweise das zweite Material als Reparaturbelagsmaterial selektiv auf den defekten Bereich 5 der Lauffläche 3 aufzutragen. Auf einen defekten Bereich 5 im schwarzen Bereich der Lauffläche 3 wird das schwarze Material aufgetragen. Auf einen defekten Bereich 5 im nicht schwarzen, andersfarbigen Bereich wird das durchsichtige Material aufgetragen. Selbst wenn dann die Beschädigung noch erkennbar sein sollte, ist das Ergebnis ästhetisch ansprechender, als wenn das schwarze Material aufgetragen werden würde, und kein Informationsgehalt des farbigen Bereichs geht verloren.

In einem alternativen Ausführungsbeispiel kann statt des durchsichtigen Materials ein nicht schwarzes, andersfarbiges Material im zweiten Reparaturbelagsapplikator 15 vorgesehen sein. Diese Anordnung ist besonders für zweifarbige Laufflächen 3 geeignet, auf deren Beschädigungen ein Reparaturbelagsmaterial passender Farbe aufgetragen werden kann, wobei im zweiten Reparaturbelagsapplikator 15 dann auch Material mit anderer Farbe als schwarz vorgesehen sein kann. In einem weiteren Ausführungsbeispiel sind mehr als zwei Reparaturbelagsapplikatoren 13, 15 vorgesehen. Die Reparaturbelagsapplikatoren 13, 15 können austauschbar sein, sodass bei vielfarbigen Laufflächen 3 eine mehrstufige Reparatur mit unterschiedlichen Farben erfolgen kann.

Die Ansteuerung des Positioniersystems 11 und des Betriebs des ersten und zweiten Reparaturbelagsapplikators 13, 15 basierend auf den detektierten defekten Bereichen 5, ihrer Position und Farbe erfolgt durch die Steuerungsvorrichtung 27.

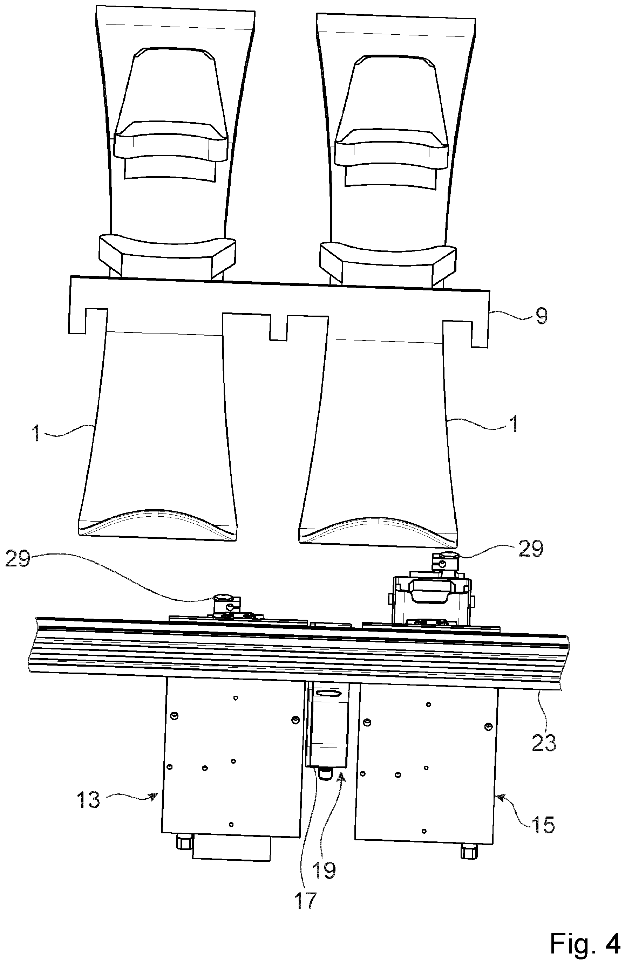

Figur 4 zeigt eine dreidimensionale Ausschnittsansicht von oben auf den ersten und zweiten Reparaturbelagsapplikator 13, 15 und die Kamera 17, die in der Bilderkennungsvorrichtung integriert ist, sowie auf ein Paar Ski 1, das in der Halterung 9 angeordnet ist.

Der zweite Reparaturbelagsapplikator 15 ist zur Lauffläche 3 eines Skis 1 bewegt worden, sodass die Austrittsdüse 29 direkt auf dem defekten Bereich 5 positioniert ist. Durchsichtiges Reparaturbelagsmaterial wird auf dem defekten Bereich 5 aufgetragen, sodass die Farbe des defekten Belags noch sichtbar ist. Der Reparaturbelagsapplikator 15 wird mittels einer Längsbewegung der Querschiene 23 und einer Querbewegung entlang der Querschiene 23 so bewegt, dass das Reparaturbelagsmaterial auf dem gesamten defekten Bereich 5 aufgetragen wird.

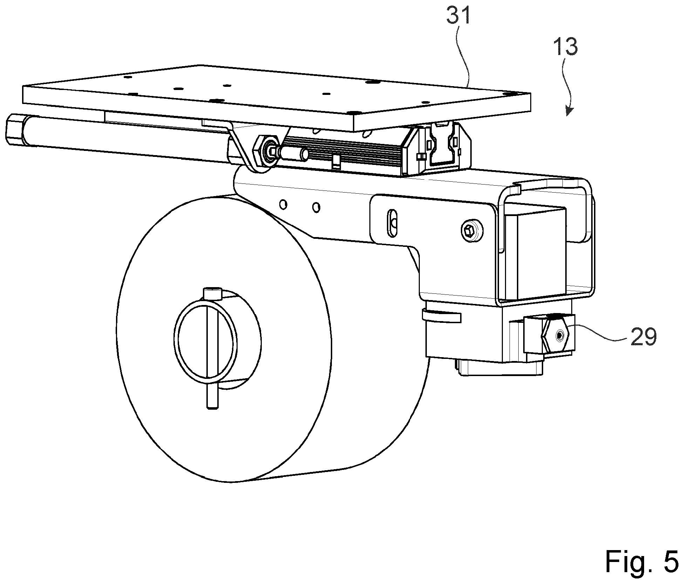

Figur 5 zeigt eine dreidimensionale Ansicht eines Ausführungsbeispiels eines Reparaturbelagsapplikators mit dem beispielhaften Bezugszeichen 13, der aber nichtsdestotrotz auch als zweiter Reparaturbelagsapplikators 15 oder als weiterer Reparaturbelagsapplikator verwendet werden kann. Der Reparaturbelagsapplikator 13 als kamerageführte Aufschmelzvorrichtung umfasst einen Aufschmelzkopf, der als Extruder mit einer Austrittsdüse 29 ausgebildet ist, durch die das Reparaturbelagsmaterial austritt. Das Reparaturbelagsmaterial ist ein beim Auftrag dickflüssiges Material, das in ausgehärtetem Zustand den Belag der Lauffläche 3 ausbildet.

Der Reparaturbelagsapplikator 13 weist eine Befestigungsvorrichtung 31 auf, mit der er über einen Schlitten mit der Querschiene 23 verbunden ist, sodass der entlang der Querschiene 23 beweglich ist. Der Reparaturbelagsapplikator 13 ist so ausgebildet, dass seine Austrittsdüse 29 in Richtung des Aufnahmebereichs 7 beweglich ist, damit die Austrittsdüse 29 in Richtung des defekten Bereichs 5 bewegt werden kann und dann das Reparaturbelagsmaterial auf den defekten Bereich 5 aufgetragen werden kann. Diese Bewegung winklig zur Längs- und Querrichtung erfolgt beispielsweise durch eine Linearführung zwischen dem Extruder und der Befestigungsvorrichtung 31. In einem alternativen Ausführungsbeispiel ist nur der Austrittsdüsenbereich in Richtung des Aufnahmebereichs 7 beweglich. Nach dem Auftragen wird die Austrittdüse 29 wieder vom defekten Bereich 5 wegbewegt und der Reparaturbelagsapplikator 13 wird zu einem weiteren defekten Bereich 5 bewegt oder in eine Ruheposition bewegt.

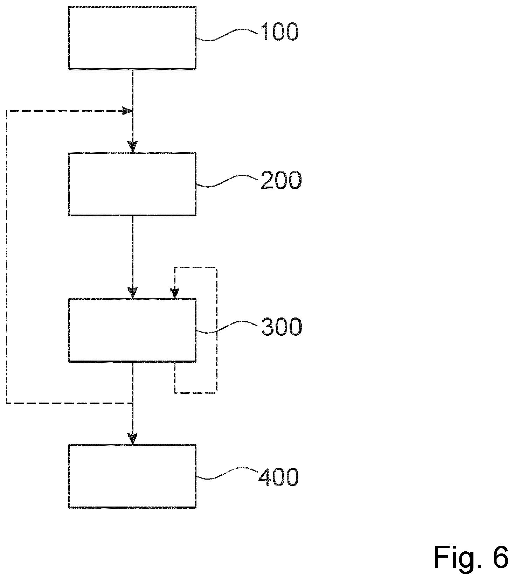

Figur 6 veranschaulicht anhand eines Blockdiagramms die wesentlichen Schritte des Verfahrens zur Laufflächenreparatur für Ski 1 und/oder Snowboard, das automatisch mit dem Laufflächenreparaturgerät durchgeführt wird.

Im Anfangsschritt 100 werden die Ski 1 oder das Snowboard in einer vorgegebenen Position im Aufnahmebereich 7 angeordnet, insbesondere indem sie in der Halterung 9 positioniert werden. Die Querschiene 23 mit dem ersten und zweiten Reparaturbelagsapplikator 13, 15 und der Kamera 17 ist in einer Ruheposition, in der die Querschiene 23 nach oben oder unten gefahren worden ist, sodass die Ski 1 oder das Snowboard leicht im Aufnahmebereich 7 positionierbar sind oder wieder aus dem Aufnahmebereich 7 entnehmbar sind.

Im nächsten Schritt 200 erfolgt die bildliche Erfassung eines streifenförmigen Bereichs der Laufflächen 3 durch die Kamera 17. Die Erfassung ist durch den Aufnahmebereich der Kamera 17 beschränkt auf zunächst einen Ski 1 oder einen streifenförmigen Bereich des Snowboards. Bei der Erfassung wird die Kamera 17 gleichzeitig mit dem ersten und zweiten Reparaturbelagsapplikator 13, 15 in Längsrichtung 25 bewegt, indem die Querschiene 23 entlang der Längsleisten 21 nach unten bewegt wird. Gleichzeitig oder anschließend erfolgt im erfassten Bild die Detektion defekter Bereiche 5 in der Gleitfläche 3 und ihrer Position durch die Bildverarbeitungsvorrichtung 19. Zusätzlich wird die Farbe des defekten Bereichs 5 und/oder seiner Umgebung detektiert. Diese Detektion kann sich in einem Ausführungsbeispiel auf die Unterscheidung zwischen schwarzen und nicht schwarzen Bereichen beschränken.

Im nächsten Schritt 300 wird die Querschiene 23 mit dem ersten und zweiten Reparaturbelagsapplikator 13 15 sowie der Kamera 17 entgegen der Längsrichtung 25 zurückbewegt bis zu einem defekten Bereich 5, der der Querschiene 23 am nächsten ist. Dann erfolgt das selektive Auftragen des Reparaturbelagsmaterials auf den defekten Bereich 5 mittels eines der Reparaturbelagsapplikatoren 13, 15. In Abhängigkeit der von der Bilderkennungsvorrichtung zuvor detektierten Farbe wird der erste oder zweite Reparaturbelagsapplikator 13, 15 ausgewählt, und das erste beziehungsweise zweite Material als Reparaturbelagsmaterial auf den defekten Bereich 5 aufgetragen.

Zur Reparatur des defekten Bereichs 5 wird der ausgewählte Reparaturbelagsapplikator 13, 15 entlang der Querschiene 23 zum defekten Bereich 5 bewegt und die Austrittsdüse 29 in Richtung der Gleitfläche 3 bewegt. Durch eine Längsbewegung und/oder Querbewegung wird die Austrittsdüse 29 so über den defekten Bereich 5 bewegt, dass das Reparaturbelagsmaterial auf den defekten Bereich 5 aufgetragen wird. Es ist möglich, dass sich ein defekter Bereich 5 sowohl in der schwarzen als auch in der andersfarbigen Lauffläche 3 erstreckt. Dann wird Reparaturbelagsmaterial bereichsweise vom ersten und bereichsweise vom zweiten Reparaturbelagsapplikator 13, 15 aufgetragen. Alternativ kann nur erstes oder zweites Material verwendet werden. Bei mehreren defekten Bereichen 5 wird der geschilderte Reparaturschritt auf dem Weg der Querschiene 23 entgegen der Längsrichtung 25 wiederholt, wie durch den gestrichelten Pfeil angedeutet ist.

Die Schritte 200 und 300 zur Bilderfassung und Reparatur werden, nachdem die Kameraposition oder deren Aufnahmebereich vor dem nächsten Bilderfassungsschritt 200 versetzt worden ist, wiederholt, bis die gesamte Breite der Gleitfläche 3 erfasst und repariert worden ist. Dies ist durch den gestrichelten Pfeil angedeutet. Bei einem Parr Ski, würde dann im nächsten Schritt der zweite Ski 1 erfasst und repariert werden.

Alternativ kann auch zunächst die gesamte Lauffläche 3 erfasst werden, indem Schritt 200 gegebenenfalls mehrfach wiederholt wird, und dann werden der oder die Reparaturschritte 300 durchgeführt.

Nach dem Aushärten des Reparaturbelagsmaterials auf den defekten Bereichen 5 wird ausgehärtetes, über die gewünschte ebene Laufflächenoberfläche aufragendes Reparaturbelagsmaterial abgetragen, sodass die Laufflächenoberfläche eben ist. Das Abtragen als Schritt 400 kann manuell oder maschinell erfolgen, nachdem die Ski 1 oder das Snowboard aus dem Laufflächenreparaturgerät entnommen worden sind.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Bezugszeichen

1 Ski
3 Lauffläche
5 defekter Bereich
7 Aufnahmebereich
9 Halterung
11 Positioniersystem
13, 15 Reparaturbelagsapplikator
17 Kamera
19 Bilderkennungsvorrichtung
21 Längsschiene
23 Querschiene
25 Längsrichtung
27 Steuervorrichtung
29 Austrittsdüse
31 Befestigungsvorrichtung
33 Gehäuse
35 Rahmen
100, 200, 300, 400 Schritt

## Patentansprüche

1. Laufflächenreparaturgerät für Ski (1) und/oder Snowboard umfassend:
- eine Bilderkennungsvorrichtung (19) mit einer Kamera (17), wobei die Kamera (17) ausgebildet ist ein Bild einer Lauffläche (3) oder eines Laufflächenbereichs eines Skis (1) oder eines Snowboards zu erfassen, und wobei die Bilderkennungsvorrichtung (19) ausgebildet ist, einen defekten Bereich (5) in der Lauffläche (3) oder dem Laufflächenbereich zu detektieren,
- einen beweglichen Reparaturbelagsapplikator (13, 15), der ausgebildet ist, ein Reparaturbelagsmaterial selektiv auf den defekten Bereich (5) aufzutragen,
- eine Steuervorrichtung (27), die ausgebildet ist, Bewegung und Betrieb des Reparaturbelagsapplikators (13, 15) zu steuern, sodass der Reparaturbelagsapplikator (13, 15) das Reparaturbelagsmaterial selektiv auf den defekten Bereich (5) der Lauffläche (3) aufträgt.

2. Laufflächenreparaturgerät nach Anspruch 1,
wobei der Reparaturbelagsapplikator (13, 15) in einer Längsrichtung (25) und in einer Querrichtung, die winklig zur Längsrichtung (25) verläuft, beweglich ist.

3. Laufflächenreparaturgerät nach Anspruch 2,
wobei die Kamera (17) in der Längsrichtung (25) beweglich ist.

4. Laufflächenreparaturgerät nach einem der Ansprüche 2 oder 3,
mit einem Aufnahmebereich (7) für den Ski (1) oder das Snowboard, insbesondere mit einer Halterung (9) für den Ski (1) oder das Snowboard, in der der Ski (1) oder das Snowboard in der Längsrichtung (25) ausrichtbar ist.

5. Laufflächenreparaturgerät nach Anspruch 4,
wobei der Reparaturbelagsapplikator (13, 15) eine Austrittsdüse (29) aufweist und so beweglich ist, dass die Austrittsdüse (29) in Richtung des Aufnahmebereichs (7) beweglich ist.

6. Laufflächenreparaturgerät nach einem der vorherigen Ansprüche,
wobei der Reparaturbelagsapplikator (13, 15) ein erster Reparaturbelagsapplikator (13) ist, der mit einem ersten Material befüllbar ist, und wobei ein zweiter Reparaturbelagsapplikator (15) vorgesehen ist, der mit einem zweiten Material befüllbar ist, und wobei die Steuervorrichtung (27) ausgebildet ist, einen vom ersten und zweiten Reparaturbelagsapplikator (13, 15) auszuwählen und so zu steuern, dass er das erste beziehungsweise das zweite Material als Reparaturbelagsmaterial selektiv auf den defekten Bereich (5) aufträgt.

7. Laufflächenreparaturgerät nach Anspruch 6,
wobei die Bilderkennungsvorrichtung (19) ausgebildet ist, eine Farbe des defekten Bereichs (5) und/oder seiner Umgebung zur detektieren, und wobei die Steuervorrichtung (27) ausgebildet ist, in Abhängigkeit der Farbe einen vom ersten und zweiten Reparaturbelagsapplikator (13, 15) auszuwählen.

8. Laufflächenreparaturgerät nach einem der vorherigen Ansprüche,
umfassend ein Positioniersystem (11), an dem die Kamera (17) und der Reparaturbelagsapplikator (13, 15) angeordnet sind.

9. Laufflächenreparaturgerät nach Anspruch 8,
wobei das Positioniersystem (11) einen Linearantrieb umfasst, mit der die Kamera (17) und der Reparaturbelagsapplikator (13, 15) gleichzeitig in die Längsrichtung (25) bewegbar sind.

10. Laufflächenreparaturgerät nach Anspruch 8 und 9,
wobei der Reparaturbelagsapplikator (13, 15) und die Kamera (17) an einer Querschiene (23) angeordnet sind, die durch den Linearantrieb bewegbar ist, wobei der Reparaturbelagsapplikator (13, 15) entlang der Querschiene (23) beweglich ist.

11. Verfahren zur Laufflächenreparatur für Ski (1) und/oder Snowboard mit den Schritten:
- bildliche Erfassung einer Lauffläche (3) oder eines Laufflächenbereichs eines Skis (1) oder eines Snowboards durch eine Kamera (17),
- Detektion eines defekten Bereichs (5) in der Lauffläche (3) durch eine Bilderkennungsvorrichtung (19), und
- selektives Auftragen eines Reparaturbelagsmaterials auf den defekten Bereich (5) mittels eines Reparaturbelagsapplikators (13, 15).

12. Verfahren nach Anspruch 11,
wobei die bildliche Erfassung der Lauffläche (3) oder des Laufflächenbereichs eine Bewegung der Kamera (17) entlang der Lauffläche (3) umfasst.

13. Verfahren nach Anspruch 12,
wobei die Kamera (17) und der Reparaturbelagsapplikator (13, 15) gleichzeitig in einer Längsrichtung (25) und dann entgegen der Längsrichtung (25) bewegt werden und wobei bei der Bewegung entgegen der Längsrichtung (25) das Reparaturbelagsmaterial selektiv auf die Lauffläche (3) aufgetragen wird.

14. Verfahren nach Anspruch 13,
wobei die Bewegung von der Kamera (17) und dem Reparaturbelagsapplikator (13, 15) gleichzeitig in Längsrichtung (25) und dann entgegen der Längsrichtung (25) als Hin- und Herbewegung mehrfach durchgeführt wird.

15. Verfahren nach einem der Ansprüche 11 bis 14,
umfassend Detektieren einer Farbe des defekten Bereichs (5) und/oder seiner Umgebung und Auswählen eines Reparaturbelagsmaterials aus einem ersten und einem zweiten Material in Abhängigkeit der Farbe des defekten Bereichs (5).
